# EUROPEAN PATENT SPECIFICATION

(11) **EP 4 468 460 B1**
(45) Date of publication and mention of the grant of the patent: **03.12.2025**
(21) Application number: 23214505.2
(22) Date of filing: 06.12.2023
(51) Int. Cl.: H01M 10/653, H01M 50/209, H01M 50/24

(54) **BATTERY MODULE AND ELECTRICAL DEVICE INCLUDING THE SAME**
BATTERIEMODUL UND ELEKTRISCHE VORRICHTUNG DAMIT
MODULE DE BATTERIE ET DISPOSITIF ÉLECTRIQUE LE COMPRENANT

(30) Priority: 24.05.2023 CN 202321281093 U; 24.05.2023 CN 202321282478 U
(43) Date of publication of application: 27.11.2024
(73) Proprietor: AESC Dynamics Technology (Jiangsu) Ltd., 214443 Wuxi City, Jiangsu Province (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN); AESC Intelligent Innovation Dynamics Technology (Shanghai) Ltd., Shanghai 201315 (CN)
(72) Inventor: LI, Dengke, Pudong New Area Shanghai, 201315 (CN); HE, Yafei, Pudong New Area Shanghai, 201315 (CN)
(74) Representative: Becker, Eberhard

(56) References cited:
- EP-A1- 3 282 515
- US-A1- 2012 003 508
- US-A1- 2021 408 621

## Description

### BACKGROUND

### Technical Field

The disclosure relates to the technical field of batteries, in particular to a battery module and an electrical device including the battery module.

### Description of Related Art

A battery module, also known as a battery device, is an energy storage unit of a power battery pack. The battery module may facilitate subsequent configuration and use by modularizing multiple batteries. Battery modules have the advantages of high power and stable voltage output, so they are commonly adopted in various industries. In order to reduce the size of the battery module and obtain higher energy density, the size of a side plate of the existing battery module will also be compressed, resulting in a smaller electrical safety distance between the battery cell array and the side plate. As a result, the charge on the housing of the battery cell leaks along the inner wall of the side plate of the battery module and a safety issue will arise.

EP 3282515 A1 relates to a battery module, a battery pack including the battery module, and a vehicle including the battery pack. US 2021/408621 A1 relates to a battery module including a battery cell stack, on which plurality of battery cells are stacked and a heat conduction member is disposed on one surface of the battery cell stack and includes a porous insulating layer and a conductive layer disposed thereon. US 2012/003508 A1 relates to batteries of electrochemical generators of lithium-ion type and the protection of lithium electrochemical generators against thermal runaway.

### SUMMARY

In view of the above shortcomings of the related art, the disclosure provides a battery module and an electrical device containing the battery module to overcome the problem of the existing battery module, that is, the short electrical safety distance between the housing of the battery cell and the side plate of the battery module. The invention is set out in the appended set of claims. The following disclosure serves a better understanding of the present invention.

In order to achieve the above purpose and other related purposes, the first aspect of the present disclosure is to provide a battery module, which includes: a battery cell array, a side plate and an insulation barrier. The side plate is peripherally arranged on the outer side of the battery cell array in the peripheral direction in a sealing manner; the insulation barrier is arranged between the side plate and the side wall of the battery cell array, and protrudes above the battery cell array.

In an example of the battery module of the present disclosure, the insulation barrier includes an insulation layer disposed on the side plate and an insulation sheet disposed on the insulation layer, the insulation sheet protrudes toward a side of the battery cell array to a position above the battery cell array.

In an example of the battery module of the present disclosure, the insulation sheet is integrally formed with the insulation layer or bonded to the insulation layer through an adhesive part.

In an example of the battery module of the present disclosure, the adhesive part is integrally connected with the insulation sheet, the adhesive part is bonded to the insulation layer, and extend upward and/or downward from the root of the insulation sheet.

In an example of the battery module of the present disclosure, the thickness of the insulation sheet is 0.1 mm to 0.5 mm.

In an example of the battery module of the present disclosure, an included angle between the insulation sheet and the inner wall of the side plate is 82° to 98°.

In an example of the battery module of the present disclosure, the cantilever length of the insulation sheet is greater than or equal to 5 mm.

In the battery module of the present disclosure, the housing of the battery cell of the battery cell array is covered with an insulation film, a window is opened on the insulation film of the battery cell on the outer side of the battery cell array, and a surface of the housing of the battery cell in the window is bonded to the insulation layer. The insulation sheet correspondingly protrudes above the window.

In an example of the battery module of the present disclosure, the battery cell array includes a plurality of battery cells, the windows are opened on the multiple battery cells on the same side surface of the battery cell array, and the insulation sheet blocks a position above each of the windows.

In an example of the battery module of the present disclosure, the side plate is peripherally disposed on the outer side of the battery cell array in the peripheral direction in a sealing manner.

The disclosure further provides an electrical device, which includes a working part and the battery module described in any one of the examples provided above, and the working part is electrically connected to the battery module to obtain electric energy support.

In the battery module of the present disclosure, an insulation barrier is provided between the side plate of the battery module and the side wall of the battery cell array, and the insulation barrier protrudes to a side of the battery cell array to a position above the battery cell array. When the charge climbs along the inner surface of the side plate, the charge needs to climb over the part of the insulation barrier protruding above the battery cell array to reach the conductive part on the outer side of the side plate. Compared with the structure without insulation barrier, the creepage distance between the housing of the battery cell and the conductive parts on the outer side of the side plate is increased, which increases the electrical safety performance of the battery module.

### BRIEF DESCRIPTION OF THE DRAWINGS

In order to more clearly illustrate the technical solutions in the embodiments of the present disclosure or the related art, the following description will briefly introduce the accompanying drawings that need to be used in the description of the embodiments or the related art. Clearly, the drawings in the following description are only some embodiments of the present disclosure, and those skilled in the art can obtain other drawings according to these drawings without any creative effort.
FIG. 1 is a three-dimensional schematic diagram of an embodiment of the battery module of the present disclosure.
FIG. 2 is a three-dimensional exploded diagram of an embodiment of the battery module of the present disclosure.
FIG. 3 is a three-dimensional schematic diagram of an embodiment of the battery module of the present disclosure.
FIG. 4 is a partially enlarged view of area A in FIG. 2.
FIG. 5 is a partially enlarged view of area B in FIG. 3.
FIG. 6 is a side view of an embodiment of the battery module of the present disclosure.
FIG. 7 is a partially enlarged view of area C in FIG. 6.
FIG. 8 is a partial configuration diagram of an insulation sheet in an embodiment of the battery module of the present disclosure.
FIG. 9 is a partial configuration diagram of an insulation sheet in another embodiment of the battery module of the present disclosure.
FIG. 10 is a partial configuration diagram of an insulation sheet in another embodiment of the battery module of the present disclosure.
FIG. 11 is a schematic diagram of removing part of the side plate in an embodiment of the battery module of the present disclosure.
FIG. 12 is a schematic diagram of a configured circuit board in an embodiment of the battery module of the present disclosure.
FIG. 13 is a three-dimensional exploded diagram of an embodiment of the battery module of the present disclosure.
FIG. 14 is a cross-sectional view of an embodiment of the battery module of the present disclosure.
FIG. 15 is a partially enlarged view of area A in FIG. 14.
FIG. 16 is a schematic diagram of an embodiment of the battery module of the present disclosure after part of the side plate and the top plate are removed.
FIG. 17 is a structural schematic diagram of an insulation flange disposed on a battery module cells contact system (CCS) in an embodiment of the battery module of the present disclosure.
FIG. 18 is a schematic diagram of the relative position of the battery module CCS and the battery cell array after configuration in an embodiment of the battery module of the present disclosure.
FIG. 19 is a partially enlarged view of area B in FIG. 18.
FIG. 20 is a schematic diagram of an embodiment of the battery module of the present disclosure.
FIG. 21 is a schematic diagram of an embodiment of the battery module of the present disclosure after a cover plate is configured.

### REFERENCE SIGNS LIST

100: battery cell array;110: battery cell;111: through window;200: side plate;210: first plate;220: second plate;230: third plate;240: fourth plate;201: insulation barrier;202: insulation layer;2021: end surface coating area;203: insulation sheet;2031:adhesive part;300: top plate;310: flexible circuit board;311: insulation flange;3111: inclined segment;3112: vertical segment;400: cover plate

### DESCRIPTION OF THE EMBODIMENTS

The implementation of the present disclosure is described below through specific examples, and those skilled in the art may easily understand other advantages and effects of the present disclosure from the content disclosed in this specification.
It should also be understood that the terminology used in the embodiments of the present disclosure is for describing a specific implementation, but not for limiting the protection scope of the present disclosure. The test methods for which specific conditions are not indicated in the following examples are usually in accordance with conventional conditions, or in accordance with the conditions suggested by various manufacturers.

When the numerical ranges are given in the embodiments, it should be understood that, unless otherwise stated in the present disclosure, the two endpoints of each numerical range and any numerical value between the two endpoints may be selected. Unless otherwise defined, persons skilled in the art may realize the disclosure by using any methods in the related art that are similar or equivalent to the methods, equipment, and materials described in the embodiments of the present disclosure based on all technical and scientific terms used in the disclosure and their understanding of the related art as well as the description of the disclosure.

It should be noted that terms such as "upper", "lower", "left", "right", "middle" and "one" quoted in this specification are only for the convenience of description and are not used to limit this specification. The practicable range of the disclosure and the change or adjustment of its relative relationship shall also be regarded as the practicable scope of the disclosure without any substantial change in the technical content.

The embodiment provides a battery module including a battery cell array, an outer plate and an insulator, the outer side plate is arranged on the outer side of the battery cell array, and the insulator is arranged on the outer side plate and the battery cell array.

In a specific embodiment, the outer side plate includes a side plate, and the insulator includes an insulation barrier; the side plate is arranged corresponding to at least one surface on the outer side of the battery cell array in the peripheral direction; the insulation barrier protrudes above the battery cell array.

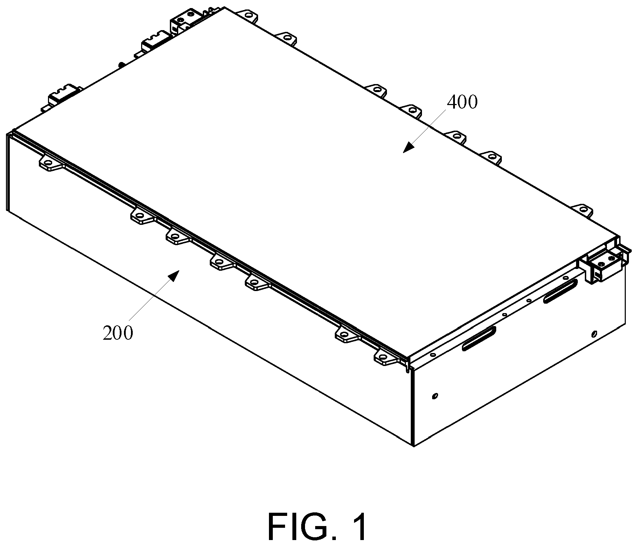

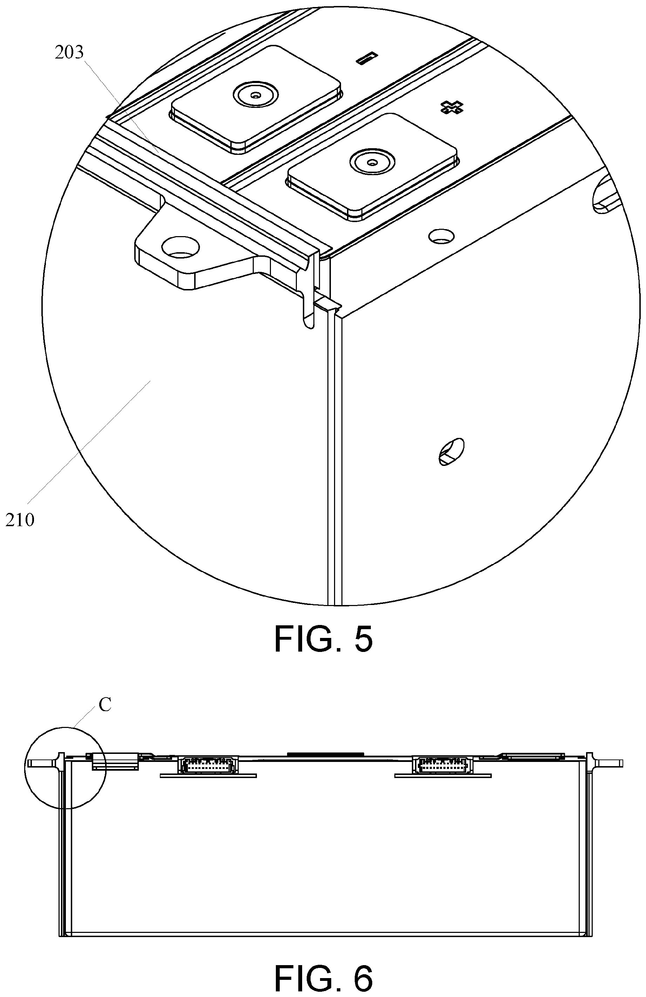

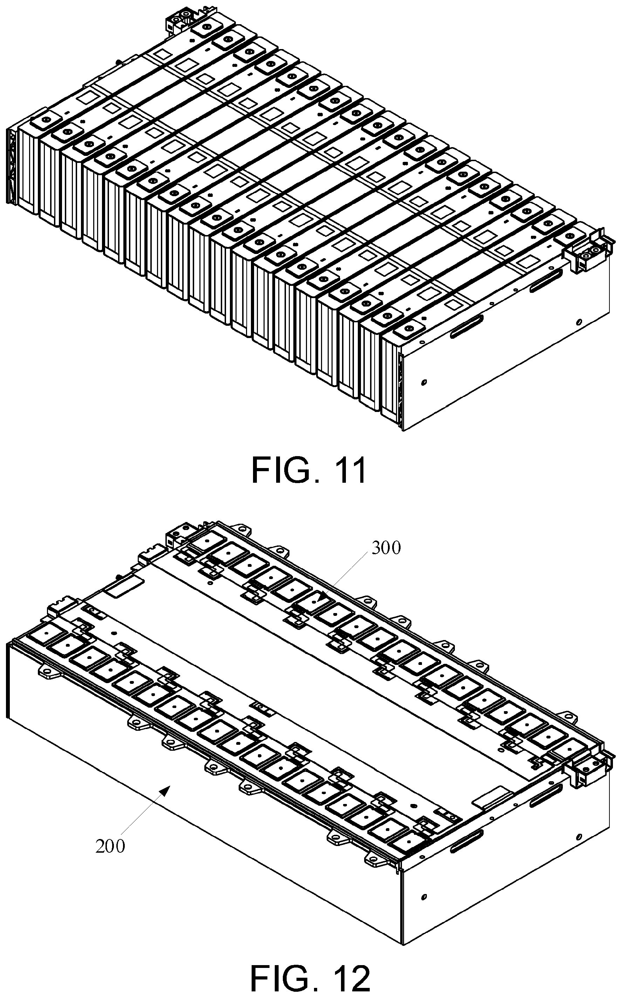

Please refer to FIG. 1 to FIG. 12. The disclosure provides a battery module and an electrical device including the battery module. In the battery module, when the charge climbs along the inner surface of the side plate 200, the charge needs to climb over the part of the insulation barrier 201 protruding above the battery cell array 100 to reach the conductive part on the outer side of the side plate 200. Compared with the structure without insulation barrier 201, the creepage distance may be increased without changing the size of the side plate 200. Accordingly, it is possible to overcome the problem of the existing battery module, that is, the short electrical safety distance between the housing of the battery cell 110 and the side plate 200 of the battery module.

Please refer to FIG. 1 to FIG. 2, the battery module includes: a battery cell array 100, a side plate 200, and an insulation barrier 201.

There may be one, two or more battery cells 110 in the battery cell array 100, and the number of battery cells 110 may be selected according to the needs of the electrical device. There may be various shapes of the battery cell 110, including but not limited to square-housing battery cells, cylindrical battery cells, pouch battery cells, etc., and the approximate shape of the overall stack of battery cell array 100 is not limited, including but not limited to cylinder, cuboid, hexagonal, multiple prisms, etc. In this embodiment, the battery cell array 100 includes a plurality of square-housing battery cells, and the plurality of square-housing battery cells are arranged in a straight line to form a battery cell array 100 approximately in the shape of a cuboid.

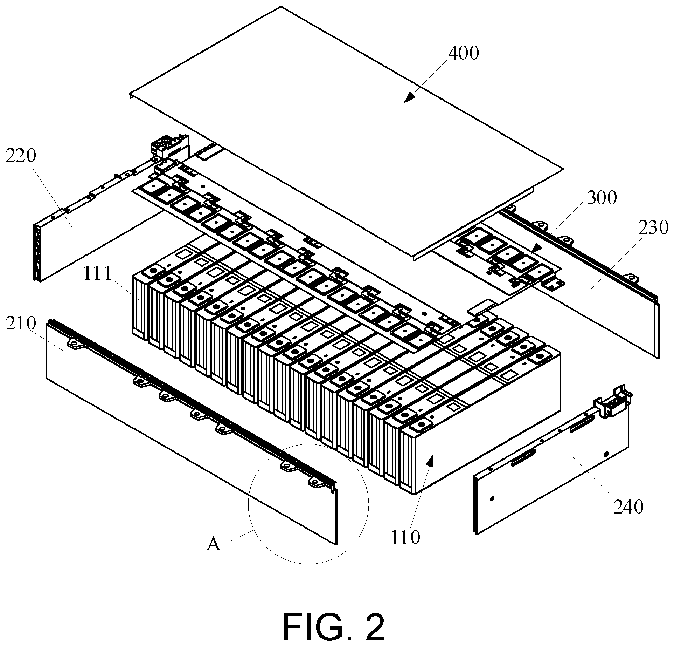

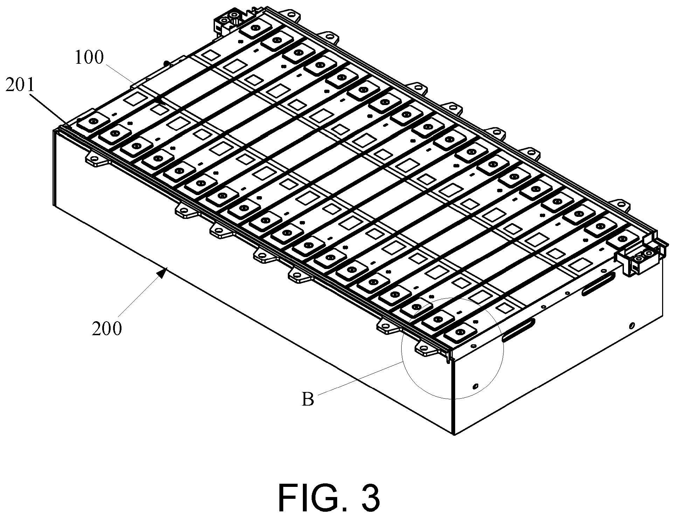

Please refer to FIG. 2 and FIG. 3, in the present disclosure, the side plate 200 is arranged corresponding to at least one surface on the outer side of the battery cell array 100 in the peripheral direction. The type of the surface is not limited, including but not limited to plane or cylindrical surface. In an embodiment of the present disclosure, the side plate 200 is peripherally arranged on the outer side of the battery cell array 100 along the peripheral direction, and has an effective protection effect and strength support on the battery cell array 100. The specific shape corresponds to the overall external contour of the battery cell array 100. For example, when the overall appearance of the battery cell array 100 is approximately a cylindrical shape, the side plate 200 may enclose to form a circular shape matching the cylindrical shape. In this embodiment, a plurality of square battery cells 110 are arranged in a straight line to form a battery cell array 100 that is approximately cuboid. Side plates 200 enclose the battery cell array 100 to form a rectangular inner space, and the top of the inner space has an opening. The specific manner of enclosure is not limited, for example, the enclosure may be integrally formed and encircle the outer side of the battery cell array 100, or may be detachably assembled and enclose the outer side of the battery cell array 100. Specifically, in this embodiment, the side plate 200 adopts the first plate 210, the second plate 220, the third plate 230 and the fourth plate 240. The first plate 210, the second plate 220, the third plate 230 and the fourth plate 240 are sequentially and detachably connected (such as bolted) to enclose the outer side of the battery cell array 100 to protect the battery cell array 100.

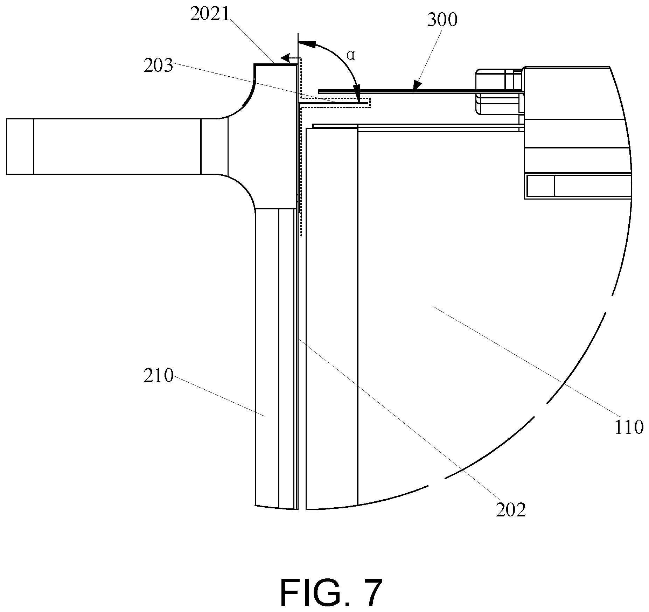

The insulation barrier 201 is disposed between the side plate 200 and the side wall of the battery cell array 100, and protrudes above the battery cell array 100 from one side of the battery cell array 100. The arrangement of the insulation barrier 201 between the battery cell array 100 and the side plate 200 is not limited, for example, the arrangement of the insulation barrier 201 may be hot-pressed on the inner wall of the side plate 200, may be cold-pasted on the inner wall of the side plate 200, and may be coated on the outer wall of the battery cell array 100, and also be pasted on the outer wall of the battery cell array 100, but not limited to the above method. The insulation barrier 201 is set to protrude above the battery cell array 100, please refer to FIG. 7, when the charge climbs along the inner surface of the side plate 200, it is necessary for the charge to climb over the insulation barrier 201 to reach the conductive parts on the outer side of the side plate 200. Compared with the structure without insulation barrier 201, the creepage distance between the housing of the battery cell 110 and the conductive parts on the outer side of the side plate 200 is increased, which increases the electrical safety performance of the battery module.

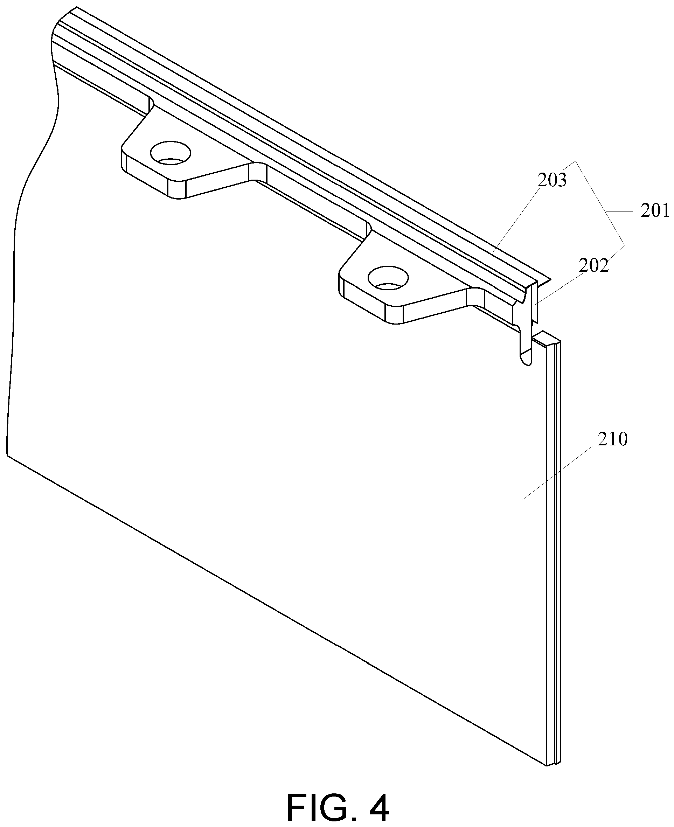

The structure of the insulation barrier 201 may be set according to the requirements, please refer to FIG. 4 to FIG. 7, in an example of the battery module of the present disclosure, the insulation barrier 201 includes the insulation layer 202 set on the side plate 200 and the insulation sheet 203 set on the insulation layer 202. The insulation layer 202 is coated on the entire inner wall of the side plate 200, and is coated upwards to the outer side of the upper end surface of the side plate 200, thereby forming an end surface coating area 2021. The insulation sheet 203 is arranged on the insulation layer 202 on the inner side of the side plate 200, and protrudes above the battery cell array 100 from one side of the battery cell array 100.

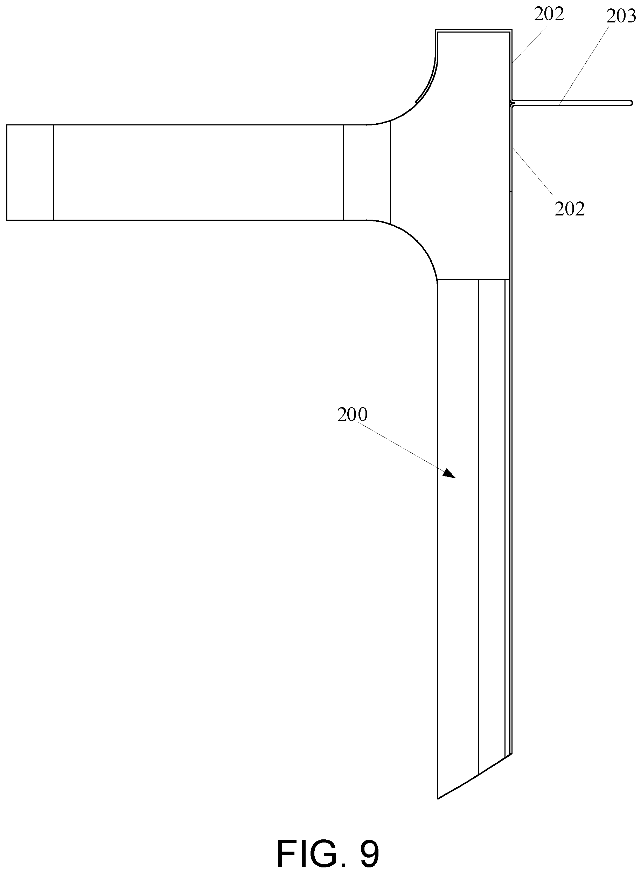

In the present disclosure, the above-mentioned insulation layer 202 and insulation sheet 203 may be arranged in an integrated structure, or may be formed by combining them separately. Please refer to FIG. 9, in an example of the battery module of the present disclosure, the insulation sheet 203 and the insulation layer 202 are integrally formed. The insulation layer 202 is formed by cold-pasting an insulation film on the inner surface of the side plate 200, and is bent at a cold-pasting position corresponding to the top of the battery cell array 100 to form an insulation sheet 203 protruding above the battery cell array 100. When cold-pasting the insulation film, when the insulation film is pasted to the position corresponding to the root of the insulation sheet 203, the insulation film is folded in half according to the preset protrusion height of the insulation sheet 203 to form the insulation sheet 203, and then paste the insulation film on the other side of the insulation sheet 203 to the inner surface of the side plate 200 on the other side of the insulation sheet 203. Such configuration may be integrally formed while forming the side plate 200 and the insulation layer 202 simultaneously without additional process.

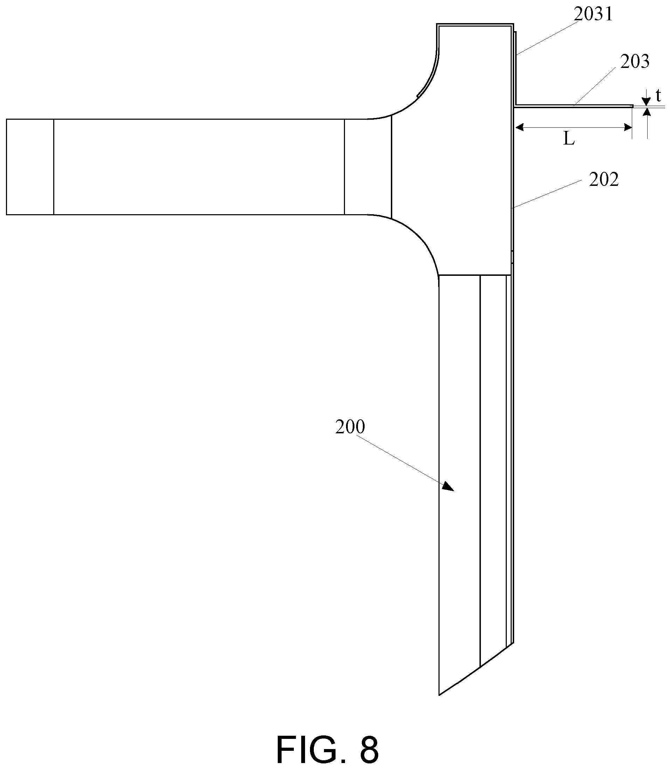

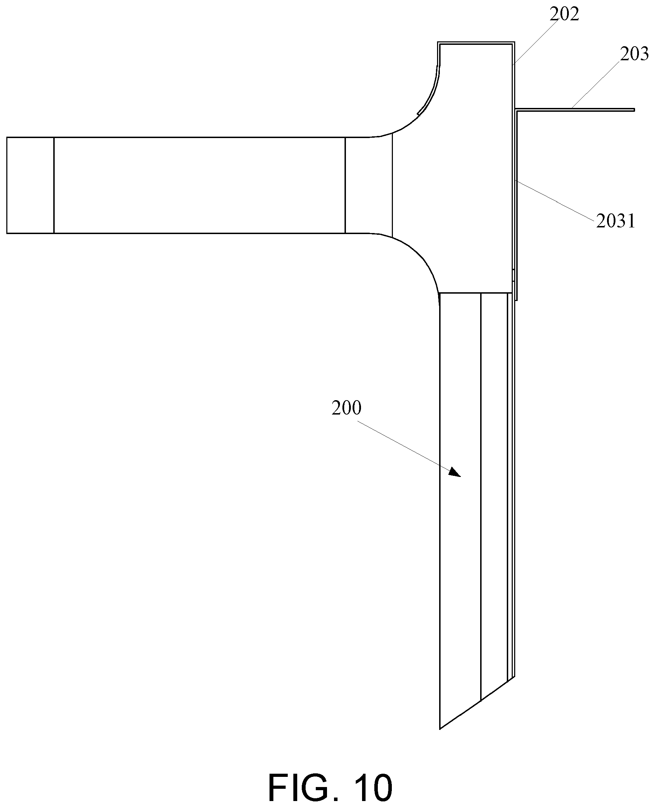

Please refer to FIG. 8 and FIG. 10, in some other embodiments, other methods may also be used to form the insulation barrier 201, for example, the insulation layer 202 and the insulation sheet 203 are arranged in a separate structure, and the insulation sheet 203 is bonded to the insulation layer 202 through the adhesive part 2031. As long as the insulation sheet 203 can be fixed in an insulated manner on the insulation layer 202 at a certain angle, the adhesive part 2031 may be arranged in various forms, for example, the adhesive part 203 may be formed integrally with the insulation sheet 203, or may be other connecting piece and the like independent of the insulation layer 202 and the insulation sheet 203.

Please refer to FIG. 8, in an example of the battery module of the present disclosure, the adhesive part 2031 is integrally connected with the insulation sheet 203, the adhesive part 2031 is bonded with the insulation layer 202, and extends upward from the root of the insulation sheet 203, the adhesive part 2031 is bonded with the surface of the insulation layer 202 through an adhesive layer. During production, the base material forming the insulation sheet 203 may be bent to form the insulation sheet 203 and the adhesive part 2031. The adhesive part 2031 extends upward from the root of the insulation sheet 203 and is integrally connected with the insulation sheet 203 in an approximate "L" shape. The adhesive part 2031 is bonded to the insulation layer 202 above the insulation sheet 203 to form a double-layer insulation structure.

Please refer to FIG. 10, in an example of the battery module of the present disclosure, different from the insulation barrier 201 in FIG. 8, the adhesive part 2031 extends downward from the root of the insulation sheet 203, and is integrally connected with the insulation sheet 203 in an approximate " ┌"-shaped connection, thereby forming a double-layer insulation structure on the insulation layer 202 between the battery cell array 100 and the side plate 200.

In an example of the battery module of the present disclosure, the insulation sheet 203 is formed into an approximate " ├" structure by bending the base material of the insulation sheet 203, and this structure has adhesive parts on both sides of the insulation sheet 203, and the adhesive parts on both sides are bonded to the surface of the insulation layer 202. On the one hand, this method may improve the bonding strength of the root of the insulation sheet 203, and on the other hand, it is possible to increase the rigidity of the root of the insulation sheet 203.

As long as the insulation may be achieved, the requirement on the thickness of the insulation sheet 203 may be less strict. Please refer to FIG. 8. Preferably, in an example of the battery module of the present disclosure, the thickness t of the insulation sheet 203 may be any value between 0.1 mm and 0.5 mm, for example: 0.1 mm, 0.2 mm, 0.3 mm, 0.4 mm and 0.5mm. In the value range of 0.1 mm to 0.5 mm, the insulation sheet 203 may maintain good insulation, and the insulation sheet 203 may have a thinner thickness as well.

Please refer to FIG. 7 and FIG. 8, although the creepage distance may be increased as long as it protrudes above the battery cell array 100, preferably, the length L of the cantilever (that is, the part above the battery cell array hangs from the inner side of the side plate) of the insulation sheet 203 mentioned in the present disclosure is greater than or equal to 5 mm, preferably greater than 5 mm. Within this length range set above, sufficient creepage distance may be ensured even if the side plate 200 above the battery cell array 100 is relatively low.

In this disclosure, as long as the insulation sheet 203 protrudes to the inner wall of the side plate 200, there may be no requirement for the angle between the insulation sheet 203 and the inner wall of the side plate 200. Please refer to FIG. 7, in an example of the battery module of the present disclosure, the included angle α between the insulation sheet 203 and the inner wall of the side plate 200 is 82° to 98°. Specifically, the included angle α may be any value within the range of 82° to 98° such as 82°, 85°, 87°, 90°, 95°, 98°, etc. Within this range, on the one hand, the insulation sheet 203 may occupy a smaller height, and on the other hand, the cantilever end of the insulation sheet 203 may be kept far enough away from the inner wall of the side plate 200.

Considering that the housing of the existing square-housing battery cell 110 are mostly made of metal, in order to further enhance the insulation effect, in an example of the battery module of the present disclosure, the housing of the battery cell 110 of the battery cell array 100 are coated with an insulation film. The insulation film may be coated on the outer side of the entire battery cell array 100, or may be coated on each battery cell 110 in the battery cell array 100. Please refer to FIG. 2 and FIG. 7, in this embodiment, the insulation film is coated on the housing of each battery cell 110, and a through window 111 is opened on the insulation film of the battery cell 110 on the outer side of the battery cell array 100. In this embodiment, the through window 111 specifically penetrates toward the top cover of the battery cell, and the housing surface of the battery cell 110 inside the window 111 is bonded to the insulation layer 202. The bonding strength between the side plate 200 and the battery cell array 100 may be increased by directly bonding the housing surface of the battery cell 110 in the window 111 to the insulation layer 202 on the inner wall of the side plate 200. The insulation sheet 203 protrudes above the window 111 correspondingly. Such setting may ensure sufficient connection strength between the battery cell array 100 and the side plate 200 on the one hand, and on the other hand it is possible to increase the creepage distance between the housing of the battery cell 110 at the window 111 and the side plate 200 through the insulation sheet 203, thereby improving the electrical safety of the battery module.

Please refer to FIG. 2 and FIG. 7, in an example of the battery module of the present disclosure, the battery cell array 100 includes a plurality of battery cells 110, and windows 111 are opened on the multiple battery cells 110 on the same side surface of the battery cell array 100. The insulation sheet 203 extends along the arrangement direction of the battery cells 110 to block a position above each window 111. This setting method may not only increase the creepage distance between the housing of the battery cell 110 (such as an aluminum housing) and the exposed metal on the outer side of the side plate 200, but also effectively ensure the safety performance of the product. On the one hand, the insulation sheet 203 may be integrally formed on the side plate 200 by hot pressing, or may be pasted on the side plate 200 by cold-pasting the insulation film (folded in half to form ribs), and the manufacturability is high. In the meantime, after the battery cell array 100 is disposed, a whole insulation sheet 203 may be set above the battery cell array 100 on the same side plate 200 to divide the windows 111 of all the battery cells 110 on the same side, instead of pasting adhesive on each battery cell 110 to increase the creepage distance of the window 111; the assembly is relatively simple and the cost is low.

In an example of the battery module of the present disclosure, the insulation sheet 203 is arranged along the peripheral direction of the battery cell array 100, and forms a closed-loop contour on the projection plane perpendicular to the opening. This arrangement may form an all-round isolation barrier on the entire side plate 200 on the circumference of the battery cell array 100.

Please refer to FIG. 1 to FIG. 2. In an example of the battery module of the present disclosure, the battery module further includes a top plate 300 and a cover plate 400. The top plate may specifically include a circuit board, and the circuit board may be, for example, a cells contact system (CCS) assembly (battery module CCS). The CCS assembly is arranged above the battery cell array 100 and above the insulation sheet 203, the CCS assembly is used to collect and control the data of a plurality of battery cells 110, and the cover plate 400 insulates and seals the opening to provide insulation and protection for the circuit board and the battery cell array 100. It should be noted that other parts of the battery module of the present disclosure that are not described in detail may be derived from the structure of the existing battery module and will not be repeated again.

The second aspect of the present disclosure is to provide an electrical device, which includes a working part and the above-mentioned battery module described in any one of the examples. The working part is electrically connected to the battery module to obtain electric energy support. The working part may be a unit component that may obtain the electric energy of the battery module and perform corresponding work, such as the fan blade rotation unit of the fan, the dust collection unit of the vacuum cleaner, the wheel drive unit in the electric vehicle, etc. Electrical devices may be vehicles, mobile phones, portable devices, notebook computers, ships, spacecraft, electric toys and electric tools, and so on. Vehicles may be fuel vehicles, gas vehicles or new energy vehicles, and new energy vehicles may be pure electric vehicles, hybrid vehicles or extended-range vehicles; spacecraft include airplanes, rockets, space shuttles and spacecraft, etc.; electric toys include fixed type or mobile electric toys, such as game consoles, electric car toys, electric boat toys and electric airplane toys, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, electric planers, and more. The embodiments of the present disclosure do not impose special limitations on the above-mentioned electrical devices.

In the battery module of the present disclosure, an insulation barrier 201 is provided between the side plate 200 of the battery module and the side wall of the battery cell array 100, and the insulation barrier 201 protrudes toward a side of the battery cell array 100 to a position above the battery cell array 100. When the charge climbs along the inner surface of the side plate 200, the charge needs to climb over the part of the insulation barrier 201 protruding above the battery cell array 100 to reach the conductive part on the outer side of the side plate 200. Compared with the structure without insulation barrier 201, the creepage distance between the housing of the battery cell 110 and the conductive parts on the outer side of the side plate 200 is increased, which increases the electrical safety performance of the battery module. Furthermore, the insulation film of the battery cell 110 on the outer side of the battery cell array 100 is provided with a through window 111, and the housing surface of the battery cell 110 in the window 111 is bonded to the insulation layer 202. Such configuration may ensure sufficient connection strength between the battery cell array 100 and the side plate 200, while increasing the creepage distance between the housing of the battery cell 110 at the window 111 and the side plate 200 through the insulation sheet 203. Furthermore, windows 111 are provided on the plurality of battery cells 110 on the same side surface of the battery cell array 100, and the insulation sheet 203 extends along the arrangement direction of the battery cells 110 to block a position above each window 111. Such configuration may increase the creepage distance between the housing of the battery cell 110 (such as an aluminum housing) and the exposed metal on the outer side of the side plate 200, thereby effectively ensuring safety performance of the product and achieving high manufacturability. The windows 111 of all the battery cells 110 on the same side may also be separated by setting a strip-shaped insulation sheet 203, and there is no need to apply adhesive on each battery cell 110 to increase the creepage distance of the windows 111. The assembly is relatively simple and the cost is low. Therefore, the disclosure effectively overcomes some practical problems in the related art and thus has high utilization value and significance of use. The above-mentioned embodiments only illustrate the principles and effects of the present disclosure, but are not intended to limit the present disclosure.

In the present disclosure, the battery module further includes a top plate, the side plate is arranged corresponding to at least one surface on the outer side of the battery cell array in the peripheral direction, and the top plate is disposed in an insulated manner on the top of the battery cell array; the insulator includes an insulation flange, and the insulation flange extends along the top plate to a position between the side plate and the battery cell array.

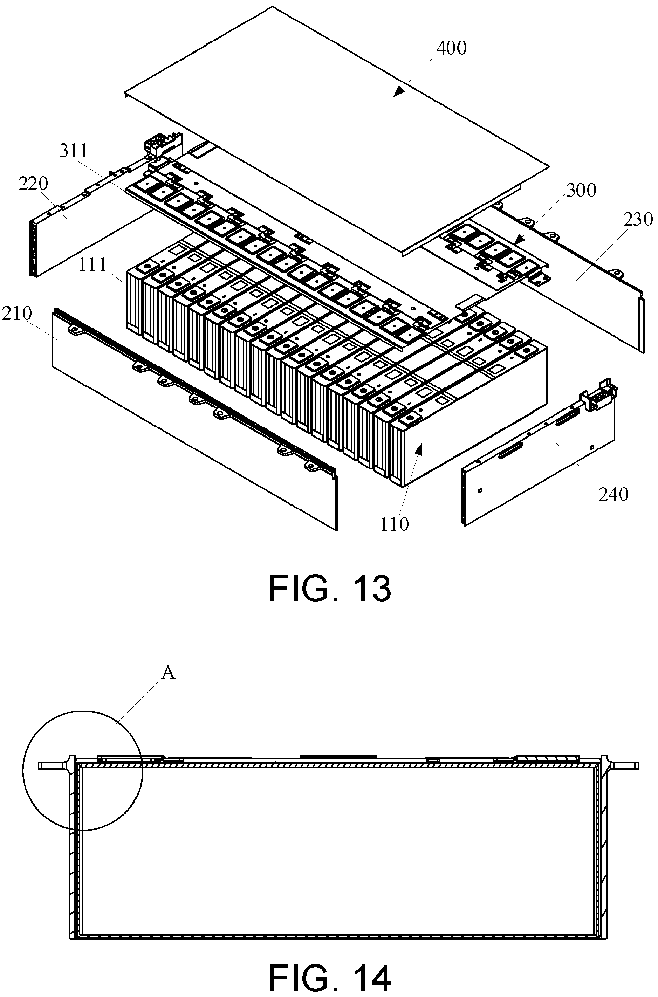

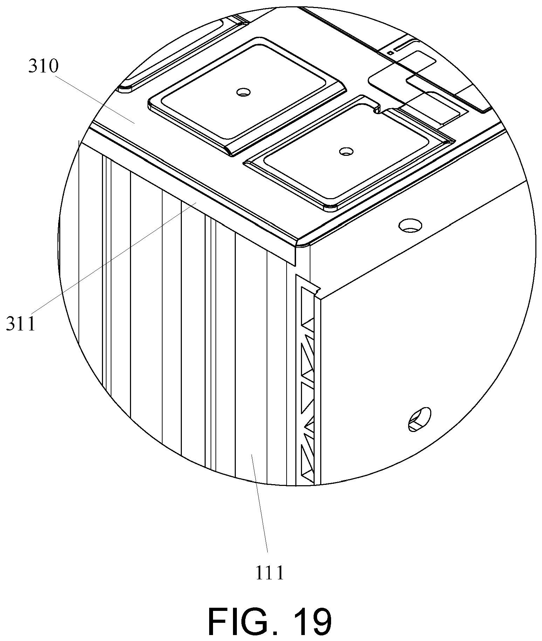

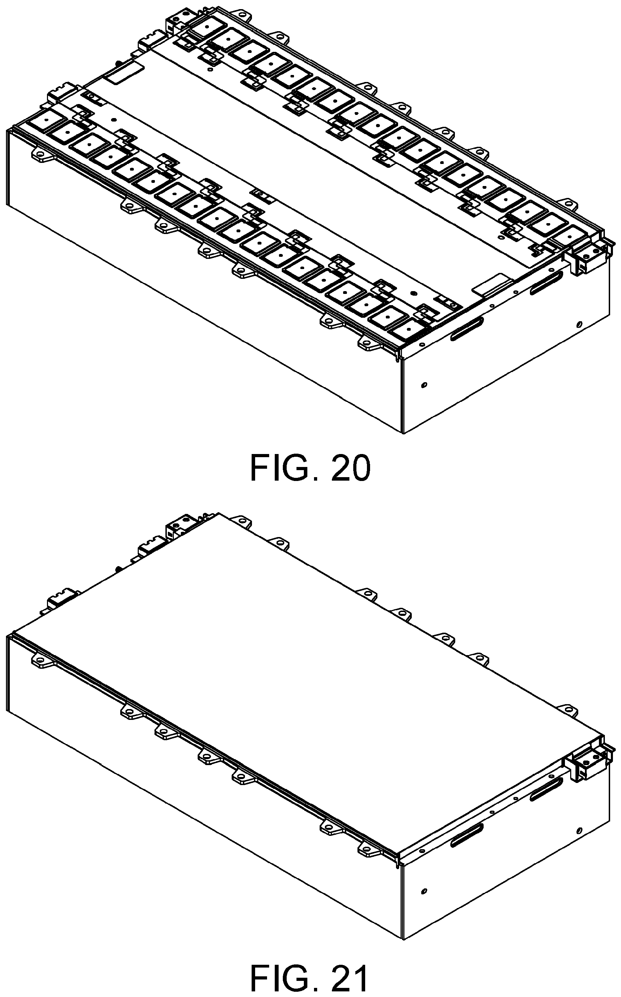

Please refer to FIG. 13 to FIG. 21. The disclosure provides a battery module and an electrical device including the battery module. The battery module is provided with an insulation flange 311, and the insulation flange 311 extends along the top plate 300 to the side wall between the side plate 200 and the side wall of the battery cell array 100. The charge on the upper conductive part of the battery cell array 100 needs to be turned down over the insulation flange 311 to reach the conductive part on the outer side of the side plate 200, which may overcome the problem of the current battery module in the related art, that is, the short electrical safety distance between the housing of the battery cell 110 and the side plate 200 of the battery module.

Please refer to FIG. 13, the battery module includes: a battery cell array 100, a side plate 200, a top plate 300 and an insulation flange 311.

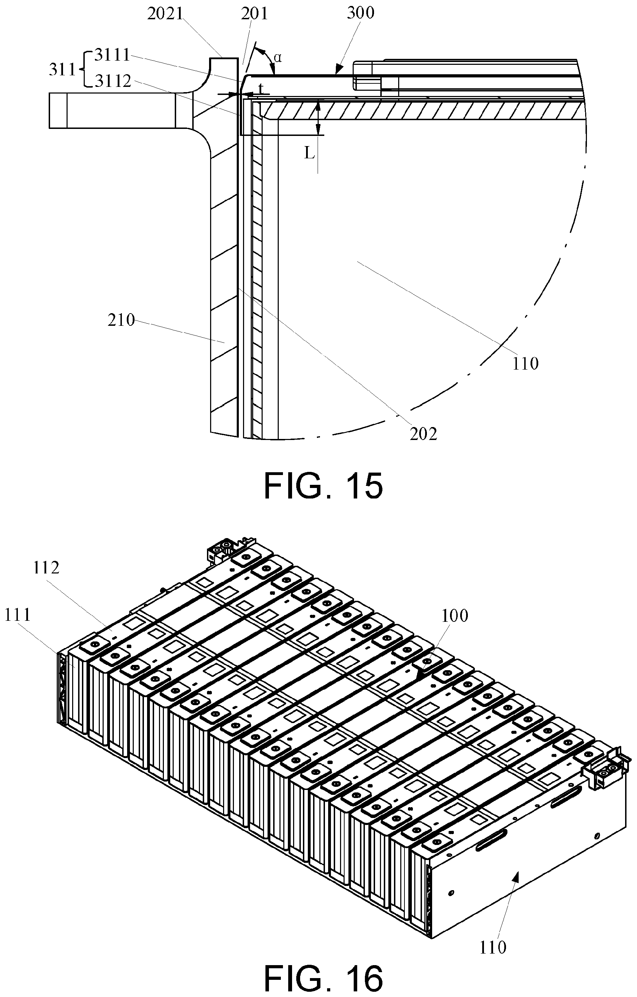

Please refer to FIG. 16, there may be one, two or more battery cells 110 in the battery cell array 100, and the number of the battery cells 110 may be selected according to the needs of the electrical device. There may be various shapes of the battery cell 110, including but not limited to a square-housing battery cell 110, a cylindrical battery cell 110, a pouch battery cell 110, etc., and the approximate shape of the overall stack of battery cell array 100 is not limited, including but not limited to cylinder prisms, cuboids, hexagons, multiple prisms, etc. In this embodiment, the battery cell array 100 includes a plurality of square-housing battery cells 110, and the plurality of square-housing batteries 110 are arranged in a straight line to form a battery cell array 100 approximately in the shape of a cuboid.

Please refer to FIG. 14 and FIG. 15, in the present disclosure, the side plate 200 is arranged corresponding to at least one surface on the outer side of the battery cell array 100 in the peripheral direction. The type of the surface is not limited, including but not limited to plane or cylindrical surface. In an embodiment of the present disclosure, the side plate 200 insulates and seals the outer side of the battery cell array 100 in the peripheral direction, and provides an effective protection and strength support for the battery cell array 100. The specific shape enclosed by the side plates 200 corresponds to the overall outer contour of the battery cell array 100. For example, when the overall appearance of the battery cell array 100 is approximately a cylindrical shape, the side plate 200 may enclose to form a circular contour matching the cylindrical shape. In this embodiment, a plurality of square-housing battery cells 110 are arranged in a straight line to form a nearly rectangular parallelepiped battery cell array 100. Side plates 200 encircle the outer side of the battery cell array 100 to form a rectangular inner space, and the top of the inner space has an opening 201. The specific manner of enclosure is not limited, for example, the enclosure may be integrally formed and encircle the outer side of the battery cell array 100, or may be detachably assembled and enclose the outer side of the battery cell array 100. Specifically, in this embodiment, the side plate 200 adopts the first plate 210, the second plate 220, the third plate 230 and the fourth plate 240. The first plate 210, the second plate 220, the third plate 230 and the fourth plate 240 are sequentially and detachably connected (such as bolted) to enclose on the outer side of the battery cell array 100 to protect the battery cell array 100. In an embodiment of the present disclosure, an insulation layer 202 is provided on the inner wall of the side plate 200, and the insulation layer 202 is coated on the entire inner wall of the side plate 200, and is coated upwards to the outer side of the upper end surface of the side plate 200, thereby forming an end surface coating area 2021.

Referring to FIG. 13, FIG. 15 and FIG. 17, the top plate 300 may be any suitable plate structure arranged on the top of the battery cell array 100 and kept insulated from the battery cell array 100, including but not limited to a circuit board, a cover plate 400 or other plate structures additionally provided. The configuration method of the top plate 300 on the top of the battery cell array 100 is also not limited, for example, the top plate 300 may be directly arranged on the top of the battery cell array 100, or may be suspended and arranged above the battery cell array 100 through other structural forms. The shape of the top plate 300 is not limited, for example, the top plate 300 may be square, circular, etc. Preferably, in an embodiment of the present disclosure, the shape of the top plate 300 matches the shape of the opening 201 enclosed by the side plate 200.

The insulation flange 311 extends along the top plate 300 into the electrical gap between the side plate 200 and the battery cell array 100. The arrangement of the insulation flange 311 on the top plate 300 is not limited, for example, the insulation flange 311 may be hot-pressed on the side plate 200, or may be cold-pasted on the top plate 300, but not limited thereto. The insulation flange 311 is extended to a position between the battery cell array 100 and the side plate 200 and block the electrical gap between the battery cell array 100 and the side plate 200. When the charge on the upper part of the battery cell array 100 needs to turn down and over the insulation flange 311 to reach the conductive parts on the outer side of the side plate 200, compared with the structure without the insulation flange 311, the creepage distance between the housing of the battery cell 110 and the conductive parts on the outer side of the side plate 200 is increased, and the electrical safety performance of the battery module is increased.

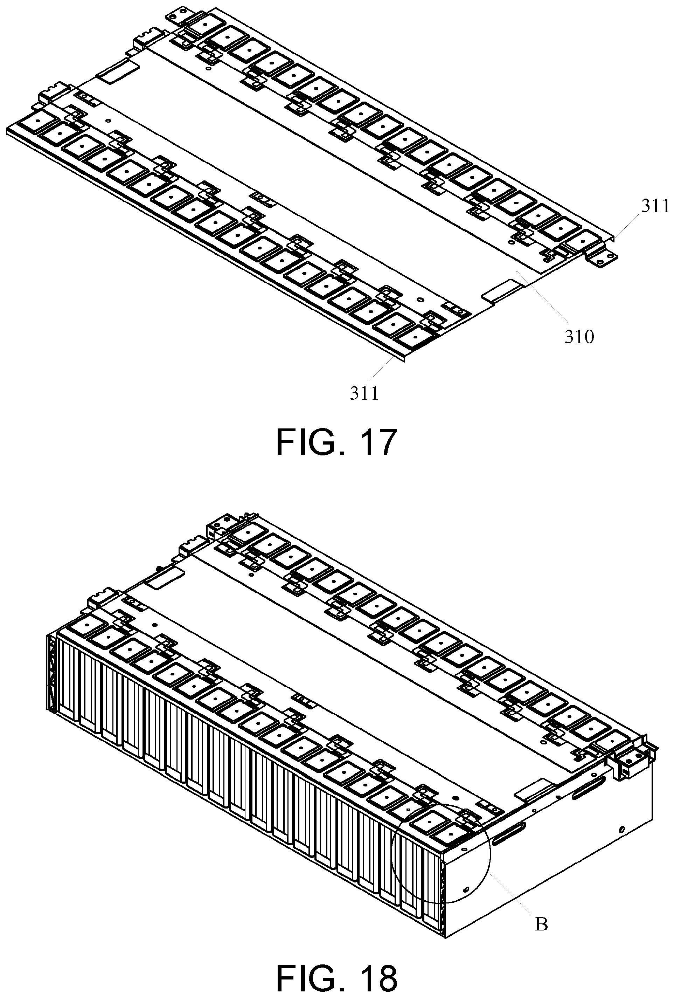

Referring to FIG. 13 and FIG. 17, in an example of the battery module of the present disclosure, the top plate 300 includes a circuit board, which may be, for example, a flexible circuit board 310 in the battery module CCS. The battery module CCS mainly include: a flexible circuit board 310, an aluminum bar and a nickel sheet. The electrode poles of multiple battery cells 110 arranged in the battery module are connected in series/parallel through multiple aluminum bars, and the flexible circuit board 310 is arranged above the battery cell array 100, and is electrically connected to multiple aluminum bars through multiple nickel sheets to collect the temperature and/or voltage of the corresponding battery cell 110, so as to monitor the state of the battery cell 110.

Please refer to FIG. 13 and FIG. 17, in an example of the battery module of the present disclosure, the insulation flange 311 is integrated with the flexible circuit board 310, and the insulation flange 311 is integrally formed during the manufacturing process of the flexible circuit board 310. There is no need to adopt an additional configuration process of the insulation flange 311, so that it is possible to improve configuration efficiency. Moreover, compared with the insulation flange 311 in the form of detachable configuration, the integrally formed insulation flange 311 has better insulation stability.

In another example of the battery module of the present disclosure, the insulation flange 311 is detachably fixed on the top plate 300, for example, detachably fixed on the edge of the top plate 300. The detachable configurations of the top plate 300 include but are not limited to bonding, hot pressing, etc. During production, the base material forming the insulation flange 311 may be bent to form an approximate " ┌"-shaped structure. In the "┌-"-shaped structure, the horizontal segment is bonded to the edge of the top plate 300, and the vertical segment is inserted between the battery cell array 100 and the side plate 200. By bending the insulation flange 311 into an approximately " ┌"-shaped structure, not only that it is possible to ensure a better adhesion between the adhesion position and the top plate 300, it is also possible to ensure that there is a stable gap between the vertical segment and the side plate 200 and the battery cell array 100.

Please refer to FIG. 14 and FIG. 15, in an example of the battery module of the present disclosure, the insulation flange 311 includes an inclined segment 3111 and a vertical segment 3112. The vertical segment 3112 is hung between the side plate 200 and the battery cell array 100, and one end of the inclined segment 3111 is connected to the upper part of the vertical segment 3112, and the other end of the inclined segment 3111 is inclined from bottom to top to one side away from the side plate 200 (first plate 210), and is connected to the top plate 300. The setting of the inclined segment 3111 may, on the one hand, enable a larger electrical gap between a position above the insulation flange 311 and the side plate 200, and on the other hand, the setting of the inclined segment 3111 helps to increase the overall rigidity of the insulation flange 311 and to form a stable support for the insulation flange 311.

Please refer to FIG. 15, in an example of the battery module of the present disclosure, the angle α between the inclined segment 3111 and the top plate 300 is 60° to 80°. Specifically, the angle α may be any value within the range of 60° to 80°, such as 60°, 65°, 70°, 75°, 80°, 85°, etc. On the one hand, within this range, a sufficient electrical gap may be maintained between the insulation flange 311 and a position above the side plate 200; on the other hand, it is possible to ensure that the insulation flange 311 has a greater length in height to better isolate the battery cell array 100 from the side plate 200.

Although the creepage distance may be increased by simply inserting into the electrical gap between the battery cell array 100 and the side plate 200, preferably, please refer to FIG. 3, the overlapping length L of the insulation flange 311 and the battery cell array 100 (i.e., the overlapping length between the insulation flange 311 and the side wall of the battery cell) is greater than or equal to 5 mm, preferably greater than 5 mm, and sufficient creepage distance may be ensured when the length is in the range.

Please refer to FIG. 15, as long as the insulation may be realized, there may not be high requirement on the thickness of the insulation flange 311. Preferably, in an example of the battery module of the present disclosure, the insulation flange 311 is detachably bonded to the edge of the top plate 300 by bonding. The thickness t of the insulation flange 311 may be any value between 0.1 mm and 0.5 mm, for example: 0.1 mm, 0.2 mm, 0.3 mm, 0.4 mm and 0.5 mm. Within the value range of 0.1 mm to 0.5 mm, the insulation flange 311 may maintain good insulation, and the insulation flange 311 may have a relatively thin thickness.

Considering that the housing of the existing square-housing battery cell 110 are mostly made of metal material, in order to further enhance the insulation effect, please refer to FIG. 16 to FIG. 18. In an example of the battery module of the present disclosure, the housing of the battery cell 110 of the battery cell array 100 is coated with an insulation film. The insulation film may be coated on the outer side of the entire battery cell array 100, or may be coated on each battery cell 110 in the battery cell array 100. In this embodiment, the insulation film is coated on the external housing of each battery cell 110, a through window 111 is opened on the insulation film of the battery cell 110 on the outer side of the battery cell array 100. In this embodiment, the through window 111 specifically penetrates toward the top cover 112 of the battery cell 110, and the housing surface of the battery cell 110 in the window 111 is bonded to the insulation layer 202. The bonding strength between the side plate 200 and the battery cell array 100 may be increased by directly bonding the housing surface of the battery cell 110 in the window 111 to the insulation layer 202 on the inner wall of the side plate 200. The insulation flange 311 protrudes correspondingly to a position above the window 111 to at least partially cover the position between the window 111 and the side plate 200. Such setting may ensure sufficient connection strength between the battery cell array 100 and the side plate 200 on the one hand, and on the other hand the creepage distance between the housing of the battery cell 110 at the window 11 and the side plate 200 may be increased through the insulation flange 311, thereby improving the electrical safety of the battery module.

Please refer to FIG. 16 to FIG. 18. In an example of the battery module of the present disclosure, the battery cell array 100 includes a plurality of battery cells 110, and windows 111 are opened on the plurality of battery cells 110 on the same side surface of the battery cell array 100, and the insulation flange 311 extends along the arrangement direction of the battery cell 110 to at least partially block the electrical gap between a position above the window 111 on the same side and the side plate 200. This arrangement not only may increase the creepage distance between the housing of the battery cell 110 (such as an aluminum housing) and the exposed metal on the outer side of the side plate 200, but also may effectively ensure the safety performance of the product. On the other hand, the insulation flange 311 may be integrated onto the top plate 300 through hot pressing, or may be pasted on the top plate 300 through a cold-pasting insulation film, and the manufacturability is high. In the meantime, after the configuration of the battery cell array 100 is completed, a whole strip of insulation flange 311 may be set above the battery cell array 100 on the same side of the top plate 300 to separate the windows 111 of all the battery cells 110 on the same side. There is no need to paste adhesive on each battery cell 110 to increase the creepage distance of the window 111; the assembly is relatively simple and the cost is low.

In an example of the battery module of the present disclosure, the insulation flange 311 is arranged along the circumference of the battery cell array 100, and is arranged around the circumference of the battery cell array 100 to form a closed-loop contour. This arrangement may be applied to the side plate 200 on the entire circumference of the battery cell array 100 to form an all-round isolation barrier.

Please refer to FIG. 13, FIG. 15 and FIG. 21, in an example of the battery module of the present disclosure, the battery module also includes a cover plate 400, the battery module CCS is arranged on the top of the battery cell array 100, and the cover plate 400 insulates and seals the opening 201 to form insulation protection for the circuit board and the battery cell array 100. It should be noted that other parts of the battery module of the present disclosure that are not described in detail may be derived from the structure of the existing battery module and will not be repeated again.

The second aspect of the present disclosure is to provide an electrical device, which includes a working part and the battery module described in any one of the examples. The working part is electrically connected to the battery module to obtain electric energy support. The working part may be a unit component that can obtain the electric energy of the battery module and perform corresponding work, such as the fan blade rotation unit of the fan, the dust collection unit of the vacuum cleaner, the wheel drive unit in the electric vehicle, etc. Electrical devices may be vehicles, mobile phones, portable devices, notebook computers, ships, spacecraft, electric toys and electric tools, and so on. Vehicles may be fuel vehicles, gas vehicles or new energy vehicles, and new energy vehicles may be pure electric vehicles, hybrid vehicles or extended-range vehicles; spacecraft include airplanes, rockets, space shuttles and spacecraft, etc.; electric toys include fixed type or mobile electric toys, such as game consoles, electric car toys, electric boat toys and electric airplane toys, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, electric planers, and more. The embodiments of the present disclosure do not impose special limitations on the above-mentioned electrical devices.

In the battery module of the present disclosure, an insulation flange 311 is disposed on the top plate 300, and the insulation flange 311 extends between the side plate 200 and the side wall of the battery cell array 100. The charge on the upper part of the battery cell array 100 needs to be turned down over the insulation flange 311 to reach the conductive part on the outer side of the side plate 200. Compared with the structure without insulation barrier 311, the creepage distance between the housing of the battery cell 110 and the conductive parts on the outer side of the side plate 200 is increased, which increases the electrical safety performance of the battery module. Furthermore, a through window 111 is opened on the insulation film of the battery cell 110 on the outer side of the battery cell array 100, and the housing surface of the battery cell 110 inside the window 111 is bonded to the insulation layer 202. Such setting may ensure sufficient connection strength between the battery cell array 100 and the side plate 200 on the one hand, and on the other hand it is possible to increase the creepage distance between the housing of the battery cell 110 at the window 111 on the upper part and the side plate 200 through the insulation flange 311. Furthermore, windows 111 are provided on the plurality of battery cells 110 on the same side of the battery cell array 100, and the insulation flange 311 extends along the arrangement direction of the battery cell 110 to block the window 111 on the upper part and the side plate 200 on the same side. In this way, it is possible to increase the creepage distance between the housing of the battery cell 110 (such as an aluminum housing) and the exposed metal on the outer side of the side plate 200, thus effectively ensuring the safety performance of the product, and having high manufacturability. The strip-shaped insulation flange 311 separates the windows 111 of all the battery cells 110 on the same side, and there is no need to paste adhesive on each battery cell 110 to increase the creepage distance of the windows 111; the assembly is relatively simple and the cost is low. Therefore, the disclosure effectively overcomes some practical problems in the related art and thus has high utilization value and significance of use.

## Claims

1. A battery module, comprising:
a battery cell array (100);
an outer side plate (200), disposed on an outer side of the battery cell array (100), wherein the outer side plate (200) comprises at least one side plate (210, 220, 230 or 240), the at least one side plate (210, 220, 230 or 240) is disposed corresponding to at least one surface on an outer side of the battery cell array (100) in a peripheral direction; and
an insulator, disposed between the outer side plate (200) and the battery cell array (100), wherein the insulator comprises an insulation barrier (201) protruding above the battery cell array (100), the insulation barrier (201) comprises an insulation layer (202) disposed on the side plate (210, 230) and an insulation sheet (203) disposed on the insulation layer (202), the insulation sheet (203) protrudes toward a side of the battery cell array (100) to a position above the battery cell array (100),
wherein a housing of a battery cell (110) of the battery cell array (100) is covered with an insulation film, a window (111) is opened on the insulation film of the battery cell (110) on the outer side of the battery cell array (100), a surface of the housing of the battery cell (110) in the window (111) is bonded to the insulation layer (202), and the insulation sheet (203) correspondingly protrudes above the window (111).

2. The battery module according to claim 1, wherein the insulator is provided on the outer side plate (200).

3. The battery module according to claim 1 or 2, wherein the insulation sheet (203) is integrally formed with the insulation layer (202) or bonded to the insulation layer (202) through an adhesive part (2031).

4. The battery module according to any one of claims 1 to 3, wherein the adhesive part (2031) is integrally connected with the insulation sheet (203), the adhesive part (2031) is bonded to the insulation layer (202), and extend upward and/or downward from a root of the insulation sheet (203).

5. The battery module according to any one of claims 1 to 4, wherein a thickness of the insulation sheet (203) is 0.1 mm to 0.5 mm.

6. The battery module according to any one of claims 1 to 5, wherein an included angle between the insulation sheet (203) and an inner wall of the side plate (210, 230) is 82° to 98°.

7. The battery module according to any one of claims 1 to 6, wherein a cantilever length of the insulation sheet (203) is greater than or equal to 5 mm.

8. The battery module according to any one of claims 1 to 7, wherein the battery cell array (100) comprises a plurality of the battery cells (110), the windows (111) are opened on the plurality of battery cells (110) on a same side surface of the battery cell array (100), and the insulation sheet (203) blocks a position above each of the windows (111).

9. An electrical device, comprising a working part, and further comprising the battery module according to any one of claims 1 to 8, wherein the working part is electrically connected to the battery module to obtain electric energy support.

10. A battery module, comprising:
a battery cell array (100);
an outer side plate (200), disposed on an outer side of the battery cell array (100), wherein the outer side plate (200) comprises at least one side plate (210, 220, 230 or 240) and a top plate (300), the at least one side plate (210, 220, 230 or 240) is disposed corresponding to at least one surface on an outer side of the battery cell array (100) in a peripheral direction; and
an insulator, disposed between the outer side plate (200) and the battery cell array (100), wherein the insulator comprises an insulation barrier (201) protruding above the battery cell array (100),
wherein the side plate (210, 220, 230 or 240) is disposed corresponding to at least one surface on an outer side of the battery cell array (100) in a peripheral direction, and the top plate (300) is disposed in an insulated manner on a top of the battery cell array (100);
the insulator comprises an insulation flange (311), and the insulation flange (311) extends along the top plate (300) to a position between the side plate (210, 230) and the battery cell array (100), and
wherein a housing of a battery cell (110) of the battery cell array (100) is covered with an insulation film, a window (111) is opened on the insulation film of the battery cell (110) on the outer side of the battery cell array (100), a surface of the housing of the battery cell (110) in the window (111) is bonded to an inner wall of the side plate (210, 230), and the insulation flange (311) at least partially covers the window (111).

11. The battery module according to claim10, wherein the insulation flange (311) is integrally formed with the top plate (300), or is detachably fixed on the top plate (300).

12. The battery module according to claim 10 or 11, wherein the side plate (210, 230) is peripherally disposed on an outer side of the battery cell array (100) in a peripheral direction in an insulated and sealing manner.

13. The battery module according to claim 11 or 12, wherein the insulation flange (311) comprises an inclined segment (3111) and a vertical segment (3112), the vertical segment (3112) is hung between the side plate (210, 230) and the battery cell array (100), and one end of the inclined segment (3111) is connected to an upper part of the vertical segment (3112), and the other end of the inclined segment (3111) is inclined from bottom to top to one side away from the side plate (210, 230), and is connected to the top plate (300).

14. The battery module according to any one of claims 11 to 13, wherein an angle between the inclined segment (3111) and the top plate (300) is 60° to 80°.

15. The battery module according to any one of claims 11 to 14, wherein an overlapping length of the insulation flange (311) and the battery cell array (100) is greater than or equal to 5 mm; a thickness of the insulation flange (311) is 0.1 mm to 0.5 mm.

16. The battery module according to any one of claims 11 to 15, wherein the battery cell array (100) comprises a plurality of the battery cells (110), the windows (111) are opened on the plurality of battery cells (110) on a same side surface of the battery cell array (100), the insulation flange (311) extends along an arrangement direction of the battery cell array (100), so as to at least partially covers a position between the windows (111) on the same side and the side plate (210, 230).

17. An electrical device, comprising a working part, and further comprising the battery module according to any one of claims 10 to 16, wherein the working part is electrically connected to the battery module to obtain electric energy support.

## Patentansprüche

1. Batteriemodul, umfassend:
ein Batteriezellenarray (100);
eine äußere Seitenplatte (200), die an einer Außenseite des Batteriezellenarrays (100) angeordnet ist, wobei die äußere Seitenplatte (200) mindestens eine Seitenplatte (210, 220, 230 oder 240) umfasst, wobei die mindestens eine Seitenplatte (210, 220, 230 oder 240) entsprechend mindestens einer Oberfläche an einer Außenseite des Batteriezellenarrays (100) in einer Umfangsrichtung angeordnet ist; und
einen Isolator, der zwischen der äußeren Seitenplatte (200) und dem Batteriezellenarray (100) angeordnet ist, wobei der Isolator eine Isolationsbarriere (201) umfasst, die über das Batteriezellenarray (100) vorsteht, wobei die Isolationsbarriere (201) eine auf der Seitenplatte (210, 230) angeordnete Isolationsschicht (202) und eine auf der Isolationsschicht (202) angeordnete Isolationsfolie (203) umfasst, wobei die Isolationsfolie (203) in Richtung einer Seite des Batteriezellenarrays (100) zu einer Position über dem Batteriezellenarray (100) vorsteht,
wobei ein Gehäuse einer Batteriezelle (110) des Batteriezellenarrays (100) mit einem Isolationsfilm bedeckt ist, eine Öffnung (111) auf dem Isolationsfilm der Batteriezelle (110) an der Außenseite des Batteriezellenarrays (100) vorhanden ist, eine Oberfläche des Gehäuses der Batteriezelle (110) in der Öffnung (111) mit der Isolationsschicht (202) verklebt ist und die Isolationsfolie (203) entsprechend über die Öffnung (111) vorsteht.

2. Batteriemodul nach Anspruch 1, wobei der Isolator an der äußeren Seitenplatte (200) bereitgestellt ist.

3. Batteriemodul nach Anspruch 1 oder 2, wobei die Isolationsfolie (203) integral mit der Isolationsschicht (202) gebildet ist oder über ein Klebeteil (2031) mit der Isolationsschicht (202) verklebt ist.

4. Batteriemodul nach einem der Ansprüche 1 bis 3, wobei das Klebeteil (2031) integral mit der Isolationsfolie (203) verbunden ist, das Klebeteil (2031) mit der Isolationsschicht (202) verklebt ist und sich von einer Wurzel der Isolationsfolie (203) nach oben und / oder unten erstreckt.

5. Batteriemodul nach einem der Ansprüche 1 bis 4, wobei eine Dicke der Isolationsfolie (203) 0,1 mm bis 0,5 mm beträgt.

6. Batteriemodul nach einem der Ansprüche 1 bis 5, wobei ein eingeschlossener Winkel zwischen der Isolationsfolie (203) und einer Innenwand der Seitenplatte (210, 230) 82 ° bis 98 ° beträgt.

7. Batteriemodul nach einem der Ansprüche 1 bis 6, wobei die Auskraglänge der Isolationsfolie (203) größer oder gleich 5 mm ist.

8. Batteriemodul nach einem der Ansprüche 1 bis 7, wobei das Batteriezellenarray (100) eine Vielzahl von Batteriezellen (110) umfasst, die Öffnungen (111) an der Vielzahl von Batteriezellen (110) an einer gleichen Seitenfläche des Batteriezellenarrays (100) vorhanden sind und die Isolationsfolie (203) eine Position über jeder der Öffnungen (111) blockiert.

9. Elektrische Vorrichtung, umfassend ein Arbeitsteil, und ferner umfassend das Batteriemodul gemäß einem der Ansprüche 1 bis 8, wobei das Arbeitsteil elektrisch mit dem Batteriemodul verbunden ist, um elektrische Energieunterstützung zu erhalten.

10. Batteriemodul, umfassend:
ein Batteriezellenarray (100);
eine äußere Seitenplatte (200), die an einer Außenseite des Batteriezellenarrays (100) angeordnet ist, wobei die äußere Seitenplatte (200) mindestens eine Seitenplatte (210, 220, 230 oder 240) und eine obere Platte (300) umfasst, wobei die mindestens eine Seitenplatte (210, 220, 230 oder 240) entsprechend mindestens einer Oberfläche an einer Außenseite des Batteriezellenarrays (100) in einer Umfangsrichtung angeordnet ist; und
einen Isolator, der zwischen der äußeren Seitenplatte (200) und dem Batteriezellenarray (100) angeordnet ist, wobei der Isolator eine Isolationsbarriere (201) umfasst, die über das Batteriezellenarray (100) vorsteht,
wobei die Seitenplatte (210, 220, 230 oder 240) entsprechend mindestens einer Oberfläche an einer Außenseite des Batteriezellenarrays (100) in einer Umfangsrichtung angeordnet ist und die obere Platte (300) isoliert auf einer Oberseite des Batteriezellenarrays (100) angeordnet ist;
wobei der Isolator einen Isolationsflansch (311) umfasst und sich der Isolationsflansch (311) entlang der oberen Platte (300) zu einer Position zwischen der Seitenplatte (210, 230) und dem Batteriezellenarray (100) erstreckt, und
wobei ein Gehäuse einer Batteriezelle (110) des Batteriezellenarrays (100) mit einem Isolationsfilm bedeckt ist, eine Öffnung (111) auf dem Isolationsfilm der Batteriezelle (110) an der Außenseite des Batteriezellenarrays (100) vorhanden ist, eine Oberfläche des Gehäuses der Batteriezelle (110) in der Öffnung (111) mit einer Innenwand der Seitenplatte (210, 230) verklebt ist und der Isolationsflansch (311) die Öffnung (111) zumindest teilweise abdeckt.

11. Batteriemodul nach Anspruch 10, wobei der Isolationsflansch (311) integral mit der oberen Platte (300) gebildet ist oder lösbar an der oberen Platte (300) befestigt ist.

12. Batteriemodul nach Anspruch 10 oder 11, wobei die Seitenplatte (210, 230) in Umfangsrichtung isoliert und abgedichtet an einer Außenseite des Batteriezellenarrays (100) angeordnet ist.

13. Batteriemodul nach Anspruch 11 oder 12, wobei der Isolationsflansch (311) ein geneigtes Segment (3111) und ein vertikales Segment (3112) umfasst, wobei das vertikale Segment (3112) zwischen der Seitenplatte (210, 230) und dem Batteriezellenarray (100) eingehängt ist und ein Ende des geneigten Segments (3111) mit einem oberen Teil des vertikalen Segments (3112) verbunden ist und das andere Ende des geneigten Segments (3111) von unten nach oben zu einer Seite weg von der Seitenplatte (210, 230) geneigt ist und mit der oberen Platte (300) verbunden ist.

14. Batteriemodul nach einem der Ansprüche 11 bis 13, wobei ein Winkel zwischen dem geneigten Segment (3111) und der oberen Platte (300) 60 ° bis 80 ° beträgt.

15. Batteriemodul nach einem der Ansprüche 11 bis 14, wobei eine Überlappungslänge des Isolationsflansches (311) und des Batteriezellenarrays (100) größer oder gleich 5 mm ist; eine Dicke des Isolationsflansches (311) 0,1 mm bis 0,5 mm beträgt.

16. Batteriemodul nach einem der Ansprüche 11 bis 15, wobei das Batteriezellenarray (100) eine Vielzahl der Batteriezellen (110) umfasst, die Öffnungen (111) an der Vielzahl von Batteriezellen (110) auf einer gleichen Seitenfläche des Batteriezellenarrays (100) vorhanden sind, sich der Isolationsflansch (311) entlang einer Anordnungsrichtung des Batteriezellenarrays (100) erstreckt, so dass er zumindest teilweise eine Position zwischen den Öffnungen (111) auf derselben Seite und der Seitenplatte (210, 230) abdeckt.

17. Elektrische Vorrichtung, die ein Arbeitsteil umfasst, und ferner das Batteriemodul gemäß einem der Ansprüche 10 bis 16 umfasst, wobei das Arbeitsteil elektrisch mit dem Batteriemodul verbunden ist, um elektrische Energieunterstützung zu erhalten.

## Revendications

1. Un module de batterie, comprenant :
un ensemble de cellules de batterie (100);
une plaque latérale extérieure (200), disposée sur un côté extérieur de l'ensemble de cellules de batterie (100), dans lequel la plaque latérale extérieure (200) comprend au moins une plaque latérale (210, 220, 230 ou 240), la au moins une plaque latérale (210, 220, 230 ou 240) est disposée de manière à correspondre à au moins une surface sur un côté extérieur de l'ensemble de cellules de batterie (100) dans une direction périphérique; et
un isolant, disposé entre la plaque latérale extérieure (200) et l'ensemble de cellules de batterie (100), dans lequel l'isolant comprend une barrière isolante (201) faisant saillie au-dessus de l'ensemble de cellules de batterie (100), la barrière isolante (201) comprend une couche isolante (202) disposée sur la plaque latérale (210, 230) et une feuille isolante (203) disposée sur la couche isolante (202), la feuille isolante (203) fait saillie vers un côté du réseau de cellules de batterie (100) jusqu'à une position au-dessus du réseau de cellules de batterie (100),
dans lequel un boîtier d'une cellule de batterie (110) de l'ensemble de cellules de batterie (100) est recouvert d'un film isolant, une fenêtre (111) est ouverte sur le film isolant de la cellule de batterie (110) sur le côté extérieur de l'ensemble de cellules de batterie (100), une surface du boîtier de la cellule de batterie (110) dans la fenêtre (111) est liée à la couche isolante (202), et la feuille isolante (203) fait saillie de manière correspondante au-dessus de la fenêtre (111).

2. Module de batterie selon la revendication 1, dans lequel l'isolant est prévu sur la plaque latérale extérieure (200).

3. Module de batterie selon la revendication 1 ou 2, dans lequel la feuille isolante (203) est formée d'un seul tenant avec la couche isolante (202) ou collée à la couche isolante (202) par l'intermédiaire d'une partie adhésive (2031).

4. Module de batterie selon l'une quelconque des revendications 1 à 3, dans lequel la partie adhésive (2031) est reliée de manière intégrale à la feuille isolante (203), la partie adhésive (2031) est collée à la couche isolante (202) et s'étend vers le haut et/ou vers le bas à partir d'une racine de la feuille isolante (203).

5. Module de batterie selon l'une quelconque des revendications 1 à 4, dans lequel l'épaisseur de la feuille isolante (203) est comprise entre 0,1 mm et 0,5 mm.

6. Module de batterie selon l'une quelconque des revendications 1 à 5, dans lequel l'angle inclus entre la feuille isolante (203) et une paroi intérieure de la plaque latérale (210, 230) est compris entre 82° et 98°.

7. Module de batterie selon l'une quelconque des revendications 1 à 6, dans lequel la longueur en porte-à-faux de la feuille isolante (203) est supérieure ou égale à 5 mm.

8. Le module de batterie selon l'une quelconque des revendications 1 à 7, dans lequel le réseau de cellules de batterie (100) comprend une pluralité de cellules de batterie (110), les fenêtres (111) sont ouvertes sur la pluralité de cellules de batterie (110) sur une même surface latérale du réseau de cellules de batterie (100), et la feuille isolante (203) bloque une position au-dessus de chacune des fenêtres (111).

9. Dispositif électrique, comprenant une partie fonctionnelle, et comprenant en outre le module de batterie selon l'une quelconque des revendications 1 à 8, dans lequel la partie fonctionnelle est connectée électriquement au module de batterie afin d'obtenir une alimentation en énergie électrique.

10. Module de batterie, comprenant:
un réseau de cellules de batterie (100) ;
une plaque latérale extérieure (200), disposée sur un côté extérieur de l'ensemble de cellules de batterie (100), dans lequel la plaque latérale extérieure (200) comprend au moins une plaque latérale (210, 220, 230 ou 240) et une plaque supérieure (300), la au moins une plaque latérale (210, 220, 230 ou 240) étant disposée de manière à correspondre à au moins une surface sur un côté extérieur de l'ensemble de cellules de batterie (100) dans une direction périphérique; et
un isolant, disposé entre la plaque latérale extérieure (200) et l'ensemble de cellules de batterie (100), dans lequel l'isolant comprend une barrière isolante (201) faisant saillie au-dessus de l'ensemble de cellules de batterie (100),
dans lequel la plaque latérale (210, 220, 230 ou 240) est disposée de manière à correspondre à au moins une surface sur un côté extérieur de l'ensemble de cellules de batterie (100) dans une direction périphérique, et la plaque supérieure (300) est disposée de manière isolée sur le dessus de l'ensemble de cellules de batterie (100);
l'isolateur comprend une bride isolante (311), et la bride isolante (311) s'étend le long de la plaque supérieure (300) jusqu'à une position située entre la plaque latérale (210, 230) et le réseau de cellules de batterie (100), et
dans lequel un boîtier d'une cellule de batterie (110) de l'ensemble de cellules de batterie (100) est recouvert d'un film isolant, une fenêtre (111) est ouverte sur le film isolant de la cellule de batterie (110) sur le côté extérieur de l'ensemble de cellules de batterie (100), une surface du boîtier de la cellule de batterie (110) dans la fenêtre (111) est collée à une paroi intérieure de la plaque latérale (210, 230), et la bride isolante (311) recouvre au moins partiellement la fenêtre (111).

11. Module de batterie selon la revendication 10, dans lequel la bride isolante (311) est formée d'un seul tenant avec la plaque supérieure (300) ou est fixée de manière amovible sur la plaque supérieure (300).

12. Module de batterie selon la revendication 10 ou 11, dans lequel la plaque latérale (210, 230) est disposée de manière périphérique sur un côté extérieur de l'ensemble de cellules de batterie (100) dans une direction périphérique de manière isolée et étanche.

13. Module de batterie selon la revendication 11 ou 12, dans lequel la bride d'isolation (311) comprend un segment incliné (3111) et un segment vertical (3112), le segment vertical (3112) est suspendu entre la plaque latérale (210, 230) et le réseau de cellules de batterie (100), et une extrémité du segment incliné (3111) est reliée à une partie supérieure du segment vertical (3112), et l'autre extrémité du segment incliné (3111) est inclinée de bas en haut vers un côté éloigné de la plaque latérale (210, 230), et est reliée à la plaque supérieure (300).

14. Module de batterie selon l'une quelconque des revendications 11 à 13, dans lequel l'angle entre le segment incliné (3111) et la plaque supérieure (300) est compris entre 60° et 80°.

15. Module de batterie selon l'une quelconque des revendications 11 à 14, dans lequel une longueur de chevauchement de la bride isolante (311) et du réseau de cellules de batterie (100) est supérieure ou égale à 5 mm; une épaisseur de la bride isolante (311) est comprise entre 0,1 mm et 0,5 mm.

16. Module de batterie selon l'une quelconque des revendications 11 à 15, dans lequel le réseau de cellules de batterie (100) comprend une pluralité de cellules de batterie (110), les fenêtres (111) sont ouvertes sur la pluralité de cellules de batterie (110) sur une même surface latérale du réseau de cellules de batterie (100), la bride isolante (311) s'étend le long d'une direction d'agencement du réseau de cellules de batterie (100), de manière à recouvrir au moins partiellement une position entre les fenêtres (111) sur le même côté et la plaque latérale (210, 230).

17. Dispositif électrique, comprenant une partie fonctionnelle, et comprenant en outre le module de batterie selon l'une quelconque des revendications 10 à 16, dans lequel la partie fonctionnelle est connectée électriquement au module de batterie afin d'obtenir une alimentation en énergie électrique.
